Europäisches Patentamt

European Patent Office

Office européen des brevets

(19)

(11) **EP 0 835 425 B1**

(12) **EUROPÄISCHE PATENTSCHRIFT**

(45) Veröffentlichungstag und Bekanntmachung des
Hinweises auf die Patenterteilung:
**16.01.2002   Patentblatt 2002/03**

(21) Anmeldenummer: **96903875.1**

(22) Anmeldetag: **17.02.1996**

(51) Int Cl.⁷: $G01C\ 19/56$

(86) Internationale Anmeldenummer:
**PCT/DE96/00248**

(87) Internationale Veröffentlichungsnummer:
**WO 97/02467 (23.01.1997 Gazette 1997/05)**

(54) **BESCHLEUNIGUNGSSENSOR**

ACCELERATION SENSOR

DETECTEUR D'ACCELERATION

(84) Benannte Vertragsstaaten:
**CH DE ES FR GB IT LI SE**

(30) Priorität: **30.06.1995  DE 19523895**

(43) Veröffentlichungstag der Anmeldung:
**15.04.1998   Patentblatt 1998/16**

(73) Patentinhaber: **ROBERT BOSCH GMBH**
**70442 Stuttgart (DE)**

(72) Erfinder:
• **GUENTHER, Gero**
  **D-30419 Hannover (DE)**

• **FUNK, Karsten**
  **D-70195 Stuttgart (DE)**
• **LAERMER, Franz**
  **D-70437 Stuttgart (DE)**
• **SCHILP, Andrea**
  **D-73525 Schwäbisch Gmünd (DE)**

(56) Entgegenhaltungen:
**EP-A- 0 623 807       US-A- 5 329 815**
**US-A- 5 377 544**

**Beschreibung**

Die Erfindung betrifft einen Beschleunigungssensor, insbesondere Coriolis-Drehratensensor, nach dem Oberbegriff des Anspruchs 1.

Stand der Technik

Als Coriolis-Drehratensensor ausgebildete Beschleunigungssensoren sind bekannt. Diese weisen beispielsweise in einer Ebene schwingende, als seismische Massen ausgebildete Strukturen auf. Diese Strukturen werden hierbei einer periodischen Linearbewegung in der Ebene mittels geeigneter Antriebseinrichtungen unterworfen. Wirkt nun auf diese in der Ebene schwingende Struktur eine Coriolisbeschleunigung, wird diese aus der Schwingebene ausgelenkt. Dies bedeutet, die Struktur muß in zwei Freiheitsgraden weich aufgehangen sein, einmal für die ebene Schwingung und zum zweiten für die Detektion der Coriolisbeschleunigung. Aufgrund während der Detektion der Coriolisbeschleunigung zum Beispiel in einem Fahrzeug auftretender, die Auslenkbewegung der Struktur aus der Ebene überlagernder Störbewegungen und Störbeschleunigungen muß die Detektion der Coriolisbeschleunigung selektiv erfolgen. Hierzu ist es bekannt, die mittels der Coriolis-Drehratensensoren gemessenen Signalverläufe durch frequenz- und phasensensitive Synchrondemodulation so aufzuarbeiten, daß die der Coriolisbeschleunigung proportionale Signalkomponente, das heißt mit richtiger Frequenz- und Phasenlage, bevorzugt und herausgefiltert werden kann.

Als interner Stand der Technik ist bekannt, an den Coriolis-Drehratensensor angreifende Störbeschleunigungen mechanisch zu unterdrücken. Hierzu ist die Schwingstruktur von zwei gegenphasig zueinander schwingenden Schwingmassen gebildet. Die gegenphasige Bewegungsrichtung der Schwingmassen ruft hierbei eine entgegengesetzt gerichtete Coriolisbeschleunigung hervor, die am Ort der Befestigungsachse ein Drehmoment bewirkt und damit eine Wippbewegung der gesamten Struktur zur Folge hat, wenn die Achse der zu messenden Drehrate senkrecht zu der planaren Schwingungsrichtung der Schwingstruktur liegt. Zur Realisierung der gegenphasigen Schwingung der zwei Schwingmassen sind diese durch eine aufwendige Koppelstruktur miteinander verbunden. Hierbei ist nachteilig:

- daß durch die Koppelstruktur die Sensorkomplexität erhöht wird;
- daß der Prozeß schwieriger und damit die Ausbeuten niedriger werden;
- daß zusätzliche Schwingungsmoden eröffnet werden und damit die Störanfälligkeit erhöht wird;
- daß die Simulation und Berechnung schwieriger wird und
- daß die Möglichkeit von Phasen- und Amplitudenfehlern zwischen den gegenphasig schwingenden Massen entsteht.

Hierdurch ist eine nachteilige Beeinflussung des gemessenen Signals gegeben.

Ein weiterer, als Coriolis-Drehratensensor ausgebildeter Beschleunigungssensor ist aus US 5,377,544 bekannt. Bei diesem Sensor zur Messung von Drehgeschwindigkeiten reagiert eine um eine Rotationsachse schwingende Scheibe auf eine Drehung um eine zweite, orthogonal zu dieser Achse liegenden Scheibe mit einer Wippbewegung um eine dritte, orthogonal zu beiden Achsen liegende Achse. Im Einzelnen besteht der Sensor gemäß US 5,377,544 aus drei Lagen von dünnen Polysilizium. Diese Lagen gliedern sich in eine untere, feste Lage mit Detektionselektroden, eine mittlere, teilweise bewegliche Lage, in der eine scheibenförmige Schwingstruktur mit Schraubenfedern gehalten ist, und in eine dritte, wiederum feste Lage, in der obere Detektionselektroden realisiert sind.

Vorteile der Erfindung

Der erfindungsgemäße Beschleunigungssensor mit den im Anspruch 1 genannten Merkmalen bietet demgegenüber den Vorteil, daß in einfacher Weise eine genaue, im wesentlichen von den genannten Signalfehlern unbeeinflußte Detektion einer Coriolisbeschleunigung möglich ist. Dadurch, daß eine in sich starre Schwingstruktur ohne Eigenbeweglichkeit in sich zur Ausführung der planaren Schwingungsbewegung drehbeweglich aufgehängt ist, wird erreicht, daß die Tangentialkomponente der Umfangsgeschwindigkeit von über den Drehpunkt der Schwingstruktur gegenüberliegenden Punkten automatisch immer entgegengesetzt ist. Hierdurch kann das Auftreten von Amplituden- und/oder Phasenfehlern wie bei gekoppelten Linearschwingern nicht stattfinden. Die das in sich starre Drehpendel tragenden Federn müssen für die Drehschwingung und auch für die drehratenbedingte Wippschwingung weich sein, um niedrige Resonanzfrequenzen und relativ große Auslenkungen zu ermöglichen. Für störende externe Linearbeschleunigungen muß das Gebilde dagegen möglichst steif sein, um diese vor Ort mechanisch zu diskriminieren. Dies wird durch Federn mit hohem Aspektverhältnis erreicht, das heißt, diese weisen eine kleine Breite bei relativ großer Höhe auf. Diese Federn sind in der Ebene biegeweich und erlauben eine niederfrequente Drehschwingung mit hoher Amplitude; auch die out-of-plane Torsionssteifigkeit ist klein, so daß große Detektionssignale erzeugt werden können. Bedingt durch die große Höhe ist ihre Biegesteifigkeit out-of-plane dagegen sehr groß, so daß out-of-plane Störbeschleunigungen sehr gut unterdrückt werden. Auch laterale Störbeschleunigungen von außen können wirksam unterdrückt werden, wenn diese Federn relativ kurz sind: Dann wirken Drehschwingungen und Wippbewegungen über einen langen mechanischen Hebel auf die Federn, während Linearbeschleunigungen keinen solchen Hebel zur Verstärkung vorfinden. Während die Federanordnung also für die erwünschten Bewegungen weich reagiert, ist sie gegenüber Störbeschleunigungen in der Ebene und auch "out-of-plane" steif, so daß diese Störbeschleunigungen nur kleine Auslenkungen bewirken können.

Ein Drehschwinger weist für sich einen periodisch oszillierenden Drehimpuls auf. Wird diese Struktur von extern gedreht, entstehen aufgrund der Drehimpulserhaltung periodisch oszillierende Momente in genau definierter Weise, die Coriolisbeschleunigungen entsprechen.

-    Drehschwingung einer in sich starren Struktur = periodisch oszillierender Drehimpuls $L=L_0 \sin \omega t$
-    externe Drehung $\Omega \Rightarrow$ periodische Drehimpulsänderung $\Rightarrow$ periodisches Drehmoment M an der Befestigungsachse (="Coriolisbeschleunigung"):

$$M = \frac{dL}{dt} = \Omega L = \Omega L_0 \sin \omega t$$

-    periodisches Drehmoment $M=\Omega L_0 \sin \omega t \Rightarrow$ Wippbewegung um Befestigungsachse

Wirken auf den Beschleunigungssensor solche Coriolisbeschleunigungen, wird die sich in der planaren Drehschwingung befindende Schwingstruktur um ihre Befestigungsachse rotiert; die planare Drehschwingung geht dabei in eine Dreh-Wipp-Schwingung über. Hierdurch wird die Schwingstruktur auf einer Seite aus der Ebene heraus und auf der über den Drehpunkt entgegengesetzten Seite in die Ebene hinein oder umgekehrt bewegt. Die durch diese Dreh-Wipp-Schwingung hervorgerufene Abstandsänderung der Schwingstruktur gegenüber der Basis kann vorzugsweise kapazitiv detektiert werden, um so ein der Coriolisbeschleunigung proportionales Signal zu erhalten. Der Beschleunigungssensor ist insgesamt sehr einfach, extrem robust und kostengünstig aufgebaut. Vorzugsweise wird der Beschleunigungssensor mit Verfahren der Oberflächen-Mikromechanik strukturiert und erhält so eine hochpräzise und damit sehr exakte Messungen ermöglichende Struktur.

In bevorzugter Ausgestaltung der Erfindung ist vorgesehen, daß unterhalb der Schwingmassen Elektroden angeordnet sind, die mit den Schwingmassen ein kapazitives Auswertemittel ergeben und die der Detektion einer drehratenbedingten Wippbewegung (out-of-plane) der Schwingstruktur dienen. Die jeweils unter einer Schwingmasse angeordneten Elektroden besitzen hierbei vorteilhafterweise eine kleinere Oberfläche als die jeweilige Schwingmasse. Hierdurch wird erreicht, daß während der planaren Drehbewegung der Schwingstruktur die Elektroden zu jedem Zeitpunkt der Bewegung der Schwingstruktur vollständig unter der jeweiligen Schwingmasse verbleiben. Hierdurch wird vermieden, daß selbst eine nur vorübergehende Beeinflussung der Kapazität infolge der planaren Drehschwingung erfolgen kann und eine Detektion einer Kapazitätsvariation ausschließlich auf die durch eine Coriolisbeschleunigung hervorgerufene Schaukelbewegung (Wippbewegung) der Schwingstruktur zurückzuführen ist. Zur Detektion der drehratenbedingten Wippschwingung kann vorteilhafterweise eine elektronische Lageregelung eingesetzt werden, um die Frequenz der Detektionsmode elektronisch über die der Drehschwingungsmode zu legen (sofern dies nicht bereits durch geeignete Designmaßnahmen mechanisch realisiert ist.) Die elektronische Lageregelung erreicht dies über eine dynamische Versteifung der Wippmode durch elektrostatische Gegenkräfte.

In einer weiteren Ausgestaltung der Erfindung ist vorgesehen, den Beschleunigungssensor außer für Drehraten auch für Linearbeschleunigungen in bevorzugter Richtung auszulegen. Dazu sind die, die Schwingstruktur tragenden Federn so auszulegen, daß sie zusätzlich zu der Drehbewegung und der out-of-plane-Torsionsbewegung auch für eine lineare laterale Bewegung in eine bevorzugte Richtung in der Ebene weich sind. Das wird erreicht, indem das Länge-Höhe-Verhältnis dieser Federn in geeigneter Weise gewählt wird. Dazu wird der Schwingstruktur eine zusätzliche Lageregelung, die vorzugsweise von diametral gegenüberliegend an den Außenseiten der die Schwingstruktur bildenden Schwingmassen angeordneten Kammstrukturen gebildet wird, zugeordnet. Hierdurch wird sehr vorteilhaft eine Doppelfunktion des Beschleunigungssensors, nämlich einerseits für die Detektion einer Coriolisbeschleunigung und andererseits für die Detektion einer Linearbeschleunigung möglich. Die auf die Schwingstruktur wirkende Linearbeschleunigung bewirkt eine definierte Veränderung der elektronischen Lageregelung, die vorteilhafterweise durch eine Veränderung von Kapazitäten infolge der durch die Linearbeschleunigung hervorgerufenen Abstandsänderungen der Schwingstruktur von fest angeordneten Kapazitäten meßbar ist. Diese Abstandsänderung kann vorteilhafterweise mit einer geeigneten, an sich bekannten Lageregelungselektronik detektiert und elektrostatisch auf Null gehalten werden. Das hierbei für die Lageregelung der Schwingstruktur verwendete elektrische Signal liefert vorteilhafterweise gleichzeitig eine Aussage über die Größe der auf die Schwingstruktur einwirkenden Linearbeschleunigungen.

Weitere vorteilhafte Ausgestaltungen der Erfindung ergeben sich aus den übrigen in den Unteransprüchen genannten Merkmalen.

Zeichnungen

Die Erfindung wird nachfolgend in Ausführungsbeispielen anhand der zugehörigen Zeichnungen näher erläutert. Es zeigen:

Figur 1 eine Draufsicht auf einen Drehratensensor;

Figur 2 eine schematische Schnittdarstellung durch den Drehratensensor gemäß Figur 1;

Figur 3 eine Draufsicht auf einen Drehratensensor nach einem zweiten Ausführungsbeispiel und

Figur 4 eine Draufsicht auf einen Drehratensensor nach einem dritten Ausführungsbeispiel.

Beschreibung der Ausführungsbeispiele

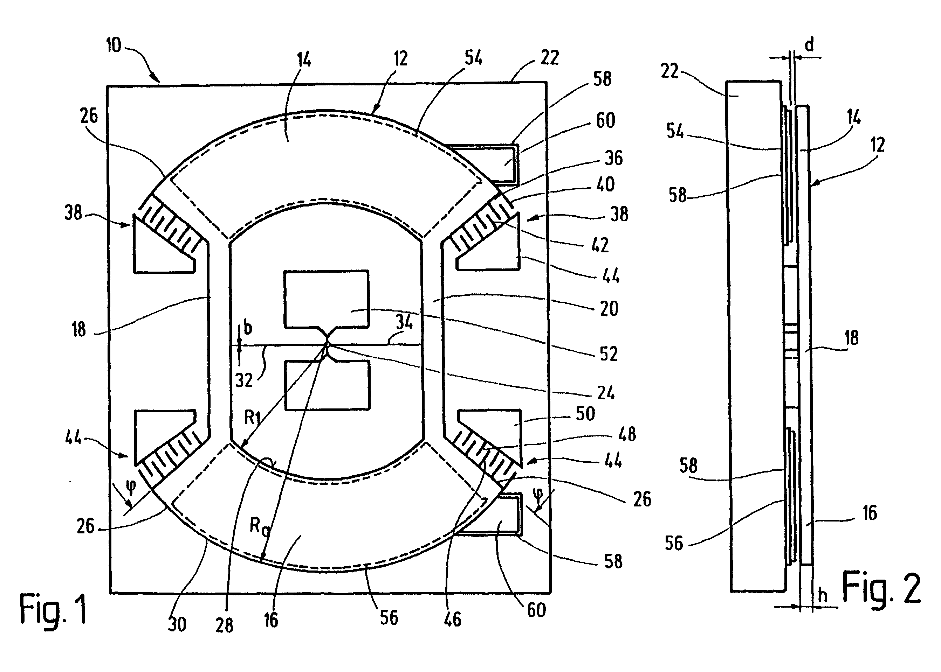

Figur 1 zeigt einen allgemein mit 10 bezeichneten Drehratensensor. Der Drehratensensor 10 besitzt eine Schwingstruktur 12, die zwei Schwingmassen 14 und 16 aufweist. Die Schwingmassen 12 und 14 sind über Stege 18 und 20 starr miteinander gekoppelt und bilden ein Drehpendel. Die Schwingstruktur 16 ist auf einem Substrat (Basis) 22 schwebend gelagert. Hierzu ist ein Lagerpunkt 24 vorgesehen, der mit dem Massemittelpunkt der Schwingstruktur 12 zusammenfällt. Die Schwingmassen 14 und 16 sind exakt symmetrisch gleich und spiegelsymmetrisch zu dem Lagerpunkt 24 angeordnet. Bei Auflage der Schwingstruktur 12 auf den Lagerpunkt 24 befindet sich diese somit in einem schwebenden, lediglich von dem Lagerpunkt 24 abgestützten Zustand. Die Schwingmassen 14 und 16 sowie die Stege 18 und 20 sind einstückig ausgebildet und beispielsweise mittels Verfahren der Oberflächen-Mikromechanik aus einem Poly-Silizium-Material strukturiert. Die Schwingstruktur 12 besitzt insgesamt eine Höhe h (Figur 2) und ist durch den Lagerpunkt 24 beabstandet und elektrisch isoliert zu dem Substrat 22 gehalten.

Die Schwingmassen 14 und 16 werden jeweils von einem Zylinderabschnitt 26 gebildet, der in Draufsicht gesehen eine Kreissektorausschnittsfläche aufweist. Der Zylinderabschnitt 26 besitzt einen Innenumfang 28 und einen Außenumfang 30. Der Innenumfang 28 verläuft auf einer Kreislinie um den Lagerpunkt 24 mit einem Radius $R_i$. Der Außenumfang 30 verläuft ebenfalls auf einer Kreislinie um den Lagerpunkt 24 mit einem Radius $R_a$. Die Zylinderabschnitte 26 der Schwingmassen 14 beziehungsweise 16 erstrecken sich über einen Winkel φ. Durch diese Anordnung wird erreicht, daß der Mittelpunkt der Schwingmassen 14 beziehungsweise 16 mit dem Lagerpunkt 24 zusammenfällt.

Die Aufhängung der Schwingstruktur 12 an dem Lagerpunkt 24 erfolgt mittels von den Stegen 18 beziehungsweise 20 ausgehenden Federn 32 beziehungsweise 34. Die Federn 32 beziehungsweise 34 besitzen ein hohes Aspektverhältnis, das heißt, diese sind im Verhältnis zu ihrer Höhe h, die der Höhe h der Schwingstruktur 12 entspricht, sehr schmal. Eine in Draufsicht gesehene Breite b der Federn 32 beziehungsweise 34 ist somit sehr klein. Dieses hohe Aspektverhältnis der Federn ist wichtig, um eine große Unterdrückung von externen Störbeschleunigungen gegenüber den zu messenden Coriolisbeschleunigungen zu erreichen.

Den auf einer Radialen verlaufenden Stirnflächen 36 der Schwingmassen 14 beziehungsweise 16 sind jeweils Kammstrukturen zugeordnet. Der Schwingmasse 14 sind Kammstrukturen 38 zugeordnet, die aus einem mit der Schwingmasse 14 verbundenen und somit beweglichen Kamm 40 und einem mit dem Kamm 40 in Eingriff stehenden und auf dem Substrat 22 fest angeordneten Kamm 42 bestehen. Der Kamm 42 ist über eine hier angedeutete Kontaktierung 44 mit einer nicht dargestellten Schaltungsanordnung verbunden. Die Schwingmasse 14 besitzt beidseitig die Kammstruktur 38. Die Schwingmasse 16 weist an ihren Stirnflächen 36 eine Kammstruktur 44 auf, die einen fest mit der Schwingmasse 16 verbundenen Kamm 46 und einen mit dem Kamm 46 in Eingriff stehenden, auf dem Substrat 22 fest angeordneten Kamm 48 besitzt. Der Kamm 48 ist über eine Kontaktierung 50 ebenfalls mit der nicht dargestellten Schaltungsanordnung verbunden. Ein Ankoppeln der Schwingstruktur 12 und damit der an der Schwingstruktur 12 angeordneten beweglichen Kämme 40 beziehungsweise 46 an die Schaltungsanordnung erfolgt über einen Massekontakt 52, der über den Lagerpunkt 24, die Federn 32 beziehungsweise 34, die Stege 18 beziehungsweise 20 und die Schwingmassen 14 beziehungsweise 16 eine Kontaktierung ermöglicht. Der Massekontakt 52 ist ebenfalls auf dem Substrat 22 angeordnet und geeignet elektrisch isoliert angeschlossen. Alle Strukturen sind über ein Zwischenoxid vom Substrat elektrisch isoliert oder aber durch pn-Übergänge im Substrat elektrisch voneinander getrennt (je nach Anschlußtechnik).

Unterhalb der Schwingmassen 14 beziehungsweise 16 ist auf dem Substrat 22 jeweils eine Elektrode 54 beziehungsweise 56 angeordnet. Die Elektroden 54 und 56 sind über eine Isolationsschicht, beispielsweise einem Siliziumoxid 58, auf dem Substrat 22 angeordnet. In Draufsicht gesehen, sind die Elektroden 54 beziehungsweise 56 mit ihrer Kontur den Schwingmassen 14 beziehungsweise 16 angepaßt, besitzen jedoch eine kleinere Kreissektorausschnittsfläche. Das heißt, der Innenradius der Elektroden 54 beziehungsweise 56 ist größer als der Innenradius $R_i$ der Schwingmassen 14 beziehungsweise 16, und der Außenradius der Elektroden 54 beziehungsweise 56 ist kleiner als der Außenradius $R_a$ der Schwingmassen 14 und 16. Darüber hinaus ist ein - hier nicht eingezeichneter - Winkel φ

der Elektroden 54 und 56 kleiner als der Winkel φ der Schwingmassen 14 beziehungsweise 16. Die Elektroden 54 und 56 sind jeweils über eine Kontaktierung 60 herausgeführt und mit der nicht dargestellten Schaltungsanordnung verbunden. Wie in Figur 2 deutlich wird, bei der im übrigen gleiche Teile wie in Figur 1 mit gleichen Bezugszeichen versehen und nicht nochmals erläutert sind, sind die Elektroden 54 beziehungsweise 56 mit einem Abstand d unterhalb der Schwingmassen 14 beziehungsweise 16 angeordnet. Zwischen den Elektroden 54 und 56 und den Schwingmassen 14 und 16 besteht somit kein unmittelbarer Berührungskontakt, und sie sind gegeneinander vollständig elektrisch isoliert.

Der in den Figuren 1 und 2 gezeigte Drehratensensor 10 übt folgende Funktion aus:

Mittels der Kammstrukturen 38 wird die Schwingstruktur 12 in eine planare Drehschwingung um den Lagerpunkt 24 versetzt. Die Kammstrukturen 38 wirken hierbei als elektrostatische Kammantriebe. Die Schwingstruktur 12 vollführt somit eine planare (in-plane) Torsionsschwingung um den Lagerpunkt 24. Die an der Schwingmasse 16 angeordneten Kammstrukturen 44 bilden einen kapazitiven Schwingungsabgriff für die Torsionsschwingung der Schwingstruktur 12 und können für eine Amplitudenstabilisierung der Torsionsschwingung und eine elektronische Rückkopplung zur Entdämpfung der Torsionsschwingung genutzt werden. Im Ausgangszustand des Drehratensensors 10 befindet sich somit die Schwingstruktur 12 in einer gleichmäßigen ebenen Torsionsschwingung um den Lagerpunkt 24. Die ein hohes Aspektverhältnis aufweisenden Federn 32 und 34 sind sowohl weich gegenüber dieser ebenen als auch gegenüber der out-of-plane Torsion, was relativ niedrige Resonanzfrequenzen der entsprechenden Moden zur Folge hat. Für externe Störbeschleunigungen sind sie dagegen biegesteif, so daß diese vor Ort unterdrückt werden. Da die Elektroden 54 und 56 kleiner als die Schwingmassen 14 und 16 dimensioniert sind, verbleiben diese auch während der ebenen Torsionsschwingung der Schwingstruktur 12 ständig unterhalb der Schwingmassen 14 beziehungsweise 16. Somit ergibt sich aufgrund der Torsionsschwingung zwischen den Elektroden 54 und 56 beziehungsweise den Schwingmassen 14 und 16 keine Kapazitätsvariation, die zu einer Signalveränderung führen würde.

Beim Auftreten einer Coriolisbeschleunigung wird die sich um den Lagerpunkt 24 in ebener Torsionsschwingung befindende Schwingstruktur 12 um die Befestigungsachse periodisch rotiert. Hierdurch wird die ebene Torsionsschwingung der Schwingstruktur 12 in eine Dreh-Wipp-Schwingung überführt. Es findet somit zusätzlich eine out-of-plane-Schwingung der Schwingstruktur 12 statt. Infolge dieser out-of-plane-Schwingung erfolgt eine Abstandsänderung zwischen den Schwingmassen 14 beziehungsweise 16 und den darunter befindlichen Elektroden 54 beziehungsweise 56. Diese Abstandsänderung kann über die Elektroden 54 beziehungsweise 56 und die mit dem Massekontakt 52 kontaktierten Schwingmassen 14 beziehungsweise 16 kapazitiv detektiert werden. Infolge der out-of-plane-Schwingung wird beispielsweise der Abstand zwischen der Schwingmasse 14 und der Elektrode 54 verringert, während gleichzeitig sich der Abstand zwischen der Schwingmasse 16 und der Elektrode 56 vergrößert. Bei Umkehr der Schwingung wird der Abstand zwischen der Schwingmasse 16 und der Elektrode 56 verringert, während sich der Abstand zwischen der Schwingmasse 14 und der Elektrode 54 vergrößert. Hiermit steigt die Kapazität zwischen den Schwingmassen 14 beziehungsweise 16 und den Elektroden 54 beziehungsweise 56 periodisch an oder fällt periodisch ab. Mittels der Kontaktierungen 60 kann diese Kapazitätsvariation mit der nicht dargestellten Schaltungsanordnung, die eine Lageregelung enthält, ausgewertet werden und ein der Kapazitätsvariation proportionales Signal, zum Beispiel die Lageregelungsspannung, das ein Maß für die auf den Drehratensensor 10 einwirkende Coriolisbeschleunigung liefert, überführt werden.

Insgesamt ist somit ein Drehratensensor 10 geschaffen, der einfach aufgebaut ist und mittels einfach zu beherrschender Schritte der Oberflächen-Mikromechanik auf Siliziumsubstraten in einem einlagigen Aufbau hergestellt werden kann. Die Kontaktierungen und Elektroden des Drehratensensors 10 können mit ebenfalls einfach beherrschbaren Verfahrensschritten der Polysiliziumabscheidung (vergrabene Polysiliziumebene) beziehungsweise Dotierungen ("Buried Layer"-Anschlußtechnik) erzielt werden. Der Drehratensensor 10 ist somit in für eine Massenproduktion geeigneter Weise mit einfachen Verfahrensschritten herstellbar, einfach aufgebaut und extrem robust.

Bei der Funktion des Drehratensensors 10 muß lediglich beachtet werden, daß die resultierende Resonanzfrequenz der out-of-plane Detektionsschwingung höher ist als die der planaren Torsionsschwingung, damit die Wippbewegung, die mit der Frequenz der Torsionsschwingung durch die Coriolisbeschleunigung hervorgerufen wird, nicht in den Bereich der Resonanzüberhöhung und damit in den Bereich schwer kontrollierbarer Nachschwingungen gelegt wird. Hierzu kann eine Lageregelung, vorzugsweise mit PD-Charakteristik, eingesetzt werden, die durch elektrostatische Kräfte die out-of-plane Torsionsmode elektrisch versteift. Eine andere Möglichkeit dazu ist eine geeignete Änderung des Designs des Drehratensensors, damit die Resonanzfrequenz der Torsion in der Ebene niedriger als die Resonanzfrequenz der out-of-plane Torsion (Detektionsmode) wird. Dazu kann vorteilhafterweise die Befestigung der Federn 32 beziehungsweise 34 an den Schwingmassen 14 beziehungsweise 16 erfolgen statt an den Haltestegen 18 beziehungsweise 20. Mittels Evakuierung oder Kompression kann weiterhin eine ideale Dämpfung von $1/\sqrt{2}$, die weitgehend eine konstante Amplitude bis nahe der Resonanzfrequenz mit anschließendem Abfall von 20 dB pro Frequenzdekade bewirkt, eingestellt werden, um das oben erwähnte unkontrollierbare Nachschwingen zu unterdrücken.

Nachfolgend werden die Zusammenhänge bei der Detektion von Coriolisbeschleunigungen mittels des Drehratensensors 10 anhand eines Berechnungsbeispiels verdeutlicht. Bei diesem Berechnungsbeispiel wurden der Einfachheit halber die Massen der Stege 18 beziehungsweise 20 vernachlässigt. Es wird jeweils nur mit einer Schwingmasse 14 beziehungsweise 16 und einer Feder 32 beziehungsweise 34 gerechnet, da sich im Verhältnis der nachfolgenden Formeln der Faktor 2 (bei Berechnung mit beiden Schwingmassen 14 und 16 und beiden Federn 32 und 34) wieder herauskürzt.

Berechnung der Resonanzfrequenzen

Resonanzfrequenz bei allgemeiner Verdrehung:

$$\omega = \sqrt{\frac{C_{Verdreh}}{J}}$$

wobei die Beziehung gilt:

$$M = C_{Verdreh} \cdot \tan\Theta$$

Resonanzfrequenz bei Linearschwingung:

$$\omega = \sqrt{\frac{C_{Lin}}{m}}$$

wobei die Beziehung gilt:

$$F = C_{Lin} \cdot \eta$$

Drehschwingung:
Federsteife gegen Drehung (einseitig fest eingespannter Balken, gebogen):

$$C_{Dreh} = \frac{EI}{l_i}$$

mit

$$I = \frac{1}{12} b^3 \cdot h$$

Massenträgheitsmoment:

$$J = \frac{1}{2} \pi \rho h \frac{\varphi}{360°} \left( R_a^4 - R_i^4 \right)$$

Wippschwingung:
Federsteife gegen Torsion (einseitig fest eingespannter Balken, verdreht):

$$C_{Tors} = \frac{GI^*_0}{l_i}$$

mit

$$I_0^* = \frac{1}{3}\left(\frac{h}{b} - 0,63\right)b^4$$

für h/b>4 und $G=\frac{E}{2,44}$ für Silizium

Massenträgheitsmoment:

$$J = \frac{1}{4}\rho h\left(R_a^4 - R_i^4\right)\left(\frac{\varphi}{2} + \frac{1}{2}\sin\varphi\right)$$

Linearbeschleunigung längs der Achse Massenschwerpunkt - Mittelpunkt:
Federsteife gegen Biegung (beidseitig fest eingespannter Balken, gebogen):

$$C_{Lin} = \frac{12EI}{l_i^3}$$

Masse:

$$m = \pi\rho h\frac{\varphi}{360°}\left(R_a^2 - R_i^2\right)$$

Berechnung der Empfindlichkeit

Die Berechnung erfolgt für eine Seite, da insgesamt zwei Massen gegen zwei Torsionsfedern arbeiten.
Masse entsprechend der vorgenannten Formel;

Umfangsgeschwindigkeit:

$$v = l_s\omega\sin\Theta$$

Drehimpuls:

$$L_0 = l_s \times v m$$

periodisch oszillierender Drehimpuls:

$$L = L_0 \sin\omega t$$

Moment:

$$M = \frac{dL}{dt} = \Omega L = \Omega L_0 \sin\omega t$$

Drehwinkel:

$$\alpha = \frac{M_{li}}{Gl_0^*}$$

Auslenkung:

$$z = R \cdot \sin \alpha$$

Nach einem konkreten Ausführungsbeispiel wird von folgender Dimesionierung des Drehratensensors 10 ausgegangen.

| | |
|---|---|
| Winkel des Kreissektorausschnittes | $\varphi = 80°$ |
| Auslenkung | $\Theta = 5°$ |
| Strukturhöhe | $h = 12\mu m$ |
| Balkenbreite | $b = 2\mu m$ |
| Balkenlänge | $1 = 200\mu m$ |
| Außenrand der Struktur | $R_a = 600\mu m$ |
| Innenrand der Struktur | $R_i = 380\mu m$ |
| Elektrodenabstand | $d = 1,2\mu m$ |
| Drehschwingungsfrequenz | $\omega = 3000 s^{-1}$ |

Bei einer Drehrate von 1°/s (=0,017 rad/s) ergeben sich folgende Werte:

| | |
|---|---|
| max. Drehmoment | $L = 2,34 * 10^{-13} Nm$ |
| max. Wippwinkel | $\alpha = 1,23 * 10^{-6} rad$ |
| max. Auslenkung (innen/außen) | $z = 0,47 nm / 0,74 nm$ |
| Grundkapazität | $C_0 = 0,31232 pF$ |
| Ø Kapazitätsvariation | $\Delta C = 0,15 fF$ |
| Kapazitätsverhältnis | $\Delta C / C_0 = 1/2000$ |

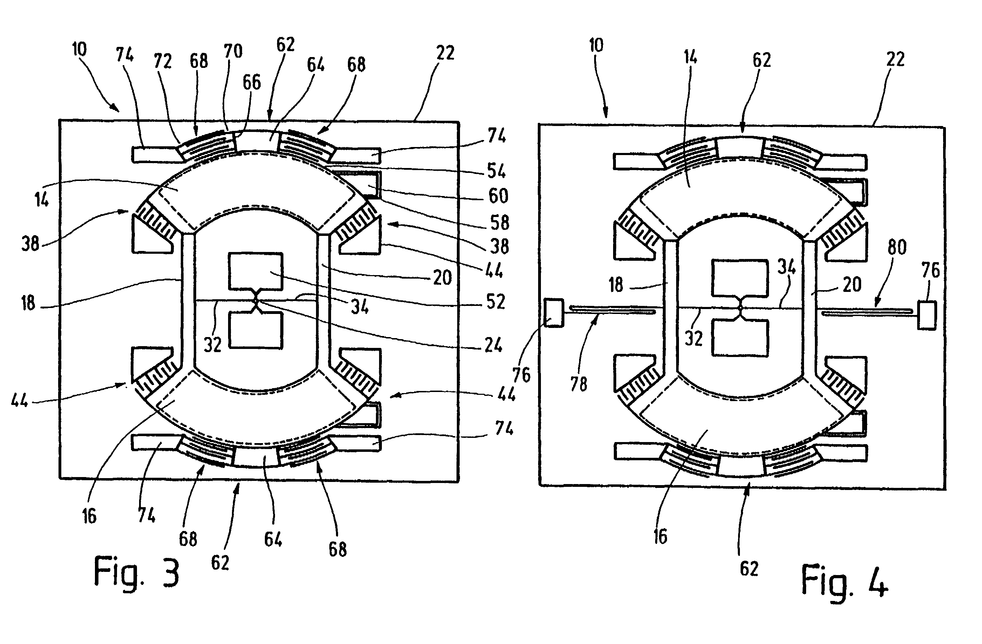

In den Figuren 3 und 4 sind weitere Ausführungsbeispiele für einen Drehratensensor 10 gezeigt. Gleiche Teile wie in Figur 1 sind mit gleichen Bezugszeichen versehen und nicht nochmals erläutert.
Bei der Beschreibung des Aufbaus und der Funktion wird lediglich auf die zu Figur 1 bestehenden Unterschiede eingegangen.
Der in Figur 3 gezeigte Drehratensensor 10 weist eine laterale elektronische Lageregelung 62 in der Ebene auf. Die Lageregelung 62 besitzt einen am Außenumfang 30 der Schwingmassen 14 beziehungsweise 16 angeordneten Abschnitt 64, an dessen jeweils radial zum Lagerpunkt 24 verlaufenden Stirnflächen 66 eine Kammstruktur 68 angeordnet ist. Die Kammstruktur 68 besitzt mit dem Abschnitt 64 verbundene und damit beweglich angeordnete Kämme 70, die mit fest auf dem Substrat 22 angeordneten Kämmen 72 in Eingriff stehen. Die einzelnen Finger der Kämme 70 beziehungsweise 72 verlaufen bogenförmig auf einer gedachten Kreislinie um den Lagerpunkt 24. Die Kämme 72 sind über eine Kontaktierung 74 mit einer nicht dargestellten Schaltungsanordnung verbunden. Die Schwingmasse 14 und die Schwingmasse 16 besitzen jeweils diametral gegenüberliegend eine Lageregelung 62, wobei die Anordnung so erfolgt, daß der exakte spiegelsymmetrische Aufbau der Schwingstruktur 12 nicht beeinträchtigt wird.
Die Lageregelung 62 übt folgende Funktion aus:
Beim bestimmungsgemäßen Einsatz des Drehratensensors 10 wird dieser neben der zu detektierenden Coriolisbeschleunigung in der Regel auch einer Linearbeschleunigung ausgesetzt. Da die Aufhängung der Schwingstruktur 12 für die planare Torsionsschwingung und für die durch die Coriolisbeschleunigung verursachte Wippschwingung weich sein muß, ist diese auch für eine senkrecht zur Drehachse der die Coriolisbeschleunigung bewirkenden Drehrate wirkenden Linearbeschleunigung nicht unendlich steif. Diese Linearbeschleunigung verursacht eine geringe Auslenkung der Schwingstruktur 12 in die Wirkungsrichtung der Linearbeschleunigung. Mittels der an den Schwingmassen 14 beziehungsweise 16 angeordneten Lageregelungen 62 wird die Auslenkung aufgrund einer einwirkenden Linearbeschleunigung jedoch vollständig unterdrückt. Bei Einwirken einer Linearbeschleunigung wird eine Kapazitätsveränderung zwischen den Kämmen 70 und den Kämmen 72 der Kammstrukturen 68 bewirkt. Diese Kapazitätsveränderung tritt aufgrund der Auslenkung der Schwingstruktur 12 auf, da sich der Abstand zwischen den Kämmen 70 beziehungsweise 72 geringfügig verändert. Aufgrund der Kapazitätsveränderung wird ein elektronisches Signal gewonnen, das eine Größe für die angreifende Linearbeschleunigung liefert. Über die nicht dargestellte Schaltungsanordnung wird ein entsprechendes Gegensignal erzeugt, das die Abstandsänderung zwischen den Kämmen 70 und 72 elektrostatisch auf Null hält. Je nach Größe der durch die Linearbeschleunigung bewirkten Auslenkung variiert hierbei das Lageregelungssignal. Neben der exakten Lageregelung der Schwingstruktur 12 kann dieses mittels der Lageregelung 62 gewonnene Signal gleichzeitig eine Aussage über die Größe der an die Schwingstruktur 12 angreifenden Linearbeschleunigung liefern. Neben dem Einsatz als Coriolis-Drehratensensor kann somit gleichzeitig ein Einsatz als Linearbeschleunigungssensor erfolgen.

Durch die bogenförmige Anordnung der Kämme 70 beziehungsweise 72 wird verhindert, daß infolge der planaren Torsionsschwingung der Schwingstruktur 62 eine Kapazitätsänderung zwischen den Kämmen 70 beziehungsweise 72 eintritt. Der infolge der Torsionsschwingung eintretende Flächenverlust auf der einen Seite der Lageregelung 62 wird durch einen gleichgroßen Flächenzuwachs auf der anderen Seite der Lageregelung 62 ausgeglichen. Hierbei wird von einem gleichgroßen Radius der Kämme 70 beziehungsweise 72 und einer geringen Oberflächenrauhigkeit der jeweils zugewandten Flächen der Kämme 70 und 72 ausgegangen.

In der in Figur 4 gezeigten Ausführungsvariante erfolgt eine Kontaktierung der Schwingmassen 14 beziehungsweise 16 der Schwingstruktur 12 durch einen außenliegenden Massekontakt 76. Hierdurch wird erreicht, daß der Lagerpunkt 24 lediglich nur noch zur drehbeweglichen Lagerung der Schwingstruktur 12 genutzt wird und keine Funktion hinsichtlich einer elektrischen Ankopplung der Schwingstruktur 12 zu übernehmen braucht. Der Anschluß der Schwingstruktur 12 erfolgt mittels in der planaren Schwingungsebene der Schwingstruktur 12 extrem weichen Federn 78 beziehungsweise 80. Die Federn 78 und 80 kontaktieren den Massekontakt 76 jeweils mittig mit den die Schwingmassen 14 und 16 verbindenden Stegen 18 beziehungsweise 20. Durch die in der planaren Schwingungsebene extrem weich ausgebildeten Federn 78 beziehungsweise 80 wird die ebene Torsionsschwingung der Schwingstruktur 12 nur unwesentlich beeinflußt, so daß die Federn 78 und 80 auf das Schwingungsverhalten der Schwingstruktur 12 einen vernachlässigbar kleinen Einfluß haben.

Andere sehr vorteilhafte Anschlußmöglichkeiten ergeben sich durch Ausnützung der unteren Kontaktebene, in der auch die Gegenelektroden für die kapazitive Detektion der out-of-plane Wippschwingung ausgeführt sind. In dieser unteren Ebene können sowohl diese Kondensatorflächen als auch Leiterbahnen zum elektrischen Anschluß der Sensorelemente ausgeführt werden. Man kann dazu eine vergrabene Polysiliziumebene oder aber diffundierte Flächen und Leiterbahnen ("Buried Layer") verwenden.

## Patentansprüche

1. Beschleunigungssensor, insbesondere Coriolis-Drehratensensor, mit

   - einem Substrat (22) mit einem Lagerpunkt (24),
   - einer an dem Lagerpunkt (24) drehbeweglich zur Ausführung einer planaren Schwingungsbewegung aufgehängten Schwingstruktur (12),
   - Mitteln (38,48) zum Erzeugen einer planaren Schwingungsbewegung der Schwingstruktur (12) sowie
   - Auswertemitteln zum Erfassen einer beschleunigungsbedingten Auslenkung der Schwingstruktur (12), insbesondere zum Erfassen einer Coriolisbeschleunigung,

   **dadurch gekennzeichnet, dass**
   die Schwingstruktur (12) mittels jeweils auf einer Radialen von dem Lagerpunkt (24) ausgehenden Federn (32, 34) mit dem Lagerpunkt (24) verbunden ist, und die Federn (32, 34) eine große Höhe (h) im Verhältnis zu ihrer Breite (b) aufweisen, so dass Störbeschleunigungen bereits unmittelbar am Beschleunigungssensor (10) mechanisch unterdrückt werden.

2. Beschleunigungssensor nach Anspruch 1, **dadurch gekennzeichnet, dass** die Schwingstruktur (12) von zwei rotationssymmetrisch zu einem Lagerpunkt (24) angeordneten Schwingmassen (14, 16) gebildet wird, die über Stege (18, 20) starr miteinander gekoppelt sind.

3. Beschleunigungssensor nach Anspruch 2, **dadurch gekennzeichnet, dass** die Schwingmassen (14, 16) jeweils von einem Zylinderabschnitt (26) gebildet sind, deren Außenumfang (30) und Innenumfang (28) einen um den Lagerpunkt (24) umlaufenden Radius ($R_a$, $R_i$) besitzen.

4. Beschleunigungssensor nach einem der vorhergehenden Ansprüche, **dadurch gekennzeichnet, dass** die die Schwingmassen (14, 16) verbindenden Stege (18, 20) über jeweils eine auf einer Radialen der Schwingstruktur (12) verlaufenden Feder (32, 34) mit dem Lagerpunkt (24) verbunden sind.

5. Beschleunigungssensor nach einem der Ansprüche 3 und 4, **dadurch gekennzeichnet, dass** die Schwingmassen (14, 16) einen elektrostatischen Kammantrieb (38) besitzen.

**EP 0 835 425 B1**

**6.** Beschleunigungssensor nach Anspruch 5 **dadurch gekennzeichnet, dass** der Kammantrieb (38) an den in Umfangsrichtung der Schwingstruktur (12) weisenden Stirnflächen (36) der Schwingmassen (14, 16) angeordnete bewegliche Kämme(40) aufweist, die mit auf dem Substrat (22) fest angeordneten Kämmen (42) ineinandergreifen.

**7.** Beschleunigungssensor nach einem der vorhergehenden Ansprüche, **dadurch gekennzeichnet, dass** die Schwingstruktur (12) insgesamt vier Kammstrukturen (38, 44) aufweist, von denen zwei als elektrostatischer Kammantrieb (38) und zwei als kapazitive Auslesung (44) geschaltet sind.

**8.** Beschleunigungssensor nach einem der vorhergehenden Ansprüche, **dadurch gekennzeichnet, dass** der Schwingstruktur (12) eine in der Ebene, das heißt lateral wirkende elektronische Lageregelung (62) zugeordnet ist.

**9.** Beschleunigungssensor nach Anspruch 8, **dadurch gekennzeichnet, dass** die elektronische Lageregelung (62) von diametral gegenüberliegend an den Außenumfängen (30) der Schwingmassen (14, 16) angeordneten Kammstrukturen (68) gebildet wird.

**10.** Beschleunigungssensor nach einem der Ansprüche 2 bis 9, **dadurch gekennzeichnet, dass** unterhalb der Schwingmassen (14, 16) Elektroden (54, 56) angeordnet sind, die mit den Schwingmassen (14, 16) ein kapazitives Auswertemittel ergeben und die der Detektion einer drehratenbedingten Schaukelbewegung, out-of-plane, der Schwingstruktur (12) dienen.

**11.** Beschleunigungssensor nach Anspruch 10, **dadurch gekennzeichnet, dass** zur Detektion der Schaukelbewegung eine elektronische Lageregelung verwendet wird.

**12.** Beschleunigungssensor nach einem der vorhergehenden Ansprüche, **dadurch gekennzeichnet, dass** die Resonanzfrequenz der out-of-plane Torsionsschwingung bereits mechanisch durch eine geeignete Befestigung der Federn (32, 34) an der Schwingstruktur (12) über der Resonanzfrequenz der Torsion in der Ebene liegt.

**13.** Beschleunigungssensor nach einem der Ansprüche 2 bis 12, **dadurch gekennzeichnet, dass** die jeweils unter einer Schwingmasse (14, 16) angeordnete Elektrode (54, 56) eine kleinere Kreissegmentfläche aufweist als die Schwingmasse (14, 16).

**14.** Beschleunigungssensor nach einem der Ansprüche 2 bis 13, **dadurch gekennzeichnet, dass** die Kontaktierung der Schwingmassen (14, 16) über den Lagerpunkt (24) erfolgt.

**15.** Beschleunigungssensor nach einem der Ansprüche 2 bis 13, **dadurch gekennzeichnet, dass** die Kontaktierung der Schwingmassen (14, 16) über von aussen an die Stege (18, 20) angreifende Kontaktverbindungen erfolgt.

**16.** Beschleunigungssensor nach Anspruch 15, **dadurch gekennzeichnet, dass** die Kontaktverbindungen von in der planaren Schwingungsebene der Schwingstruktur (12) extrem weich ausgebildeten Federn (78, 80) gebildet werden.

**17.** Beschleunigungssensor nach einem der Ansprüche 14 bis 16, **dadurch gekennzeichnet, dass** die Kontaktierung über eine vergrabene Polysiliziumebene erfolgt.

**18.** Beschleunigungssensor nach einem der Ansprüche 14 bis 16, **dadurch gekennzeichnet, dass** die Kontaktierung über vergrabene diffundierte Zonen im Substratmaterial, diffundierte Leiterbahnen beziehungsweise diffundierte Kondensatorflächen erfolgt.

**Claims**

**1.** Acceleration sensor, in particular a Coriolis rate-of-rotation sensor, having

- a substrate (22) with a bearing point (24),
- an oscillatory structure (12) rotationally suspended at the bearing point (24) in order to execute a planar oscillatory movement,
- means (38, 48) for generating a planar oscillatory movement of the oscillatory structure (12), and
- evaluation means for detecting an acceleration-induced deflection of the oscillatory structure (12), in particular for detecting a Coriolis acceleration, **characterised in that** the oscillatory structure (12) is connected to the bearing point (24) by means of springs (32, 34) which in each case go out from the bearing point (24) on a radial, and the springs (32, 34) have a large height (h) in relation to their width (b) such that interfering accelerations are already suppressed mechanically directly at the acceleration sensor (10).

2. Acceleration sensor according to Claim 1, **characterized in that** the oscillatory structure (12) is formed by two oscillatory masses (14, 16) which are arranged in a rotationally symmetrical fashion to a bearing point (24) and are rigidly coupled to one another via webs (18, 20).

3. Acceleration sensor according to Claim 2, **characterized in that** the oscillatory masses (14, 16) are formed in each case by a cylindrical section (26) whose outer circumference (30) and inner circumference (28) have a radius ($R_a$, $R_i$) revolving around the bearing point (24).

4. Acceleration sensor according to one of the preceding claims, **characterized in that** the webs (18, 20) connecting the oscillatory masses (14, 16) are connected to the bearing point (24) via in each case a spring (32, 34) extending on a radial of the oscillatory structure (12).

5. Acceleration sensor according to either of Claims 3 and 4, **characterized in that** the oscillatory masses (14, 16) have an electrostatic comb drive (38).

6. Acceleration sensor according to Claim 5, **characterized in that** the comb drive (38) has mobile combs (40) which are arranged at end faces (36), pointing in the circumferential direction of the oscillatory structure (12), and which mesh with combs (42) fixedly arranged on the substrate (22).

7. Acceleration sensor according to one of the preceding claims, **characterized in that** the oscillatory structure (12) has a total of four comb structures (38, 44), of which two are connected as an electrostatic comb drive (38) and two are connected as a capacitive readout (44).

8. Acceleration sensor according to one of the preceding claims, **characterized in that** the oscillatory structure (12) is assigned an electronic position controller (62) which acts in the plane, that is to say laterally.

9. Acceleration sensor according to Claim 8, **characterized in that** the electronic position controller (62) is formed by comb structures (68) arranged diametrically opposite on the outer circumferences (30) of the oscillatory masses (14, 16).

10. Acceleration sensor according to one of Claims 2 to 9, **characterized in that** arranged below the oscillatory masses (14, 16) are electrodes (54, 56) which form a capacitive evaluation means with the oscillatory masses (14, 16) and which serve to detect a rocking, out-of-plane, movement of the oscillatory structure (12) induced by the rate of rotation.

11. Acceleration sensor according to Claim 10, **characterized in that** an electronic position controller is used to detect the rocking movement.

12. Acceleration sensor according to one of the preceding claims, **characterized in that** the resonant frequency of the out-of-plane torsional oscillation is already mechanically higher than the resonant frequency of the torsion in the plane owing to a suitable fastening of the springs (32, 34) on the oscillatory structure (12).

13. Acceleration sensor according to one of Claims 2 to 12, **characterized in that** the electrode (54, 56) arranged in each case below an oscillatory mass (14, 16) has a smaller circular segment surface than the oscillatory mass (14, 16).

14. Acceleration sensor according to one of Claims 2 to 13, **characterized in that** the oscillatory masses (14, 16) make contact via the bearing point (24).

15. Acceleration sensor according to one of Claims 2 to 13, **characterized in that** the oscillatory masses (14, 16) make contact via contact connections acting from outside on the webs (18, 20).

16. Acceleration sensor according to Claim 15, **characterized in that** the contact connections are formed by springs (78, 80) constructed in an extremely soft fashion in the planar plane of oscillation of the oscillatory structure (12).

17. Acceleration sensor according to one of Claims 14 to 16, **characterized in that** contact is made via a buried polysilicon plane.

18. Acceleration sensor according to Claims 14 to 16, **characterized in that** contact is made via buried diffused zones in the substrate material, diffused conductor tracks or diffused capacitor surfaces.

**Revendications**

1. Capteur d'accélération notamment capteur de vitesse de rotation de Coriolis comprenant :

   - un substrat (22) avec un palier ponctuel (24),
   - une structure oscillante (12) suspendue au palier ponctuel (24), de manière mobile en rotation pour effectuer un mouvement d'oscillation plan,
   - des moyens (38, 48) pour générer un mouvement d'oscillation plan avec la structure oscillante (12), et
   - des moyens d'exploitation pour saisir le débattement de la structure oscillante (12) liée à l'accélération, notamment pour détecter une accélération de Coriolis,

   **caractérisé en ce que**
   la structure oscillante (12) est reliée par des ressorts (32, 34) partant chaque fois dans une direction radiale par rapport au palier ponctuel (24), et les ressorts (32, 34) ont une hauteur (h) par rapport à leur largeur (b), telle que les accélérations perturbatrices soient éliminées mécaniquement directement au niveau du capteur d'accélération (10).

2. Capteur d'accélération selon la revendication 1,
   **caractérisé en ce que**
   la structure oscillante (12) est formée par deux masses oscillantes (14, 16) installées symétriquement en rotation par rapport au palier ponctuel (24), ces masses étant couplées rigidement par des entretoises (18, 20).

3. Capteur d'accélération selon la revendication 2,
   **caractérisé en ce que**
   les masses oscillantes (14, 16) sont formées chacune d'un segment de cylindre (26) dont la périphérie extérieure (30) et la périphérie intérieure (28) possèdent un rayon (Ra, Ri) par rapport au palier ponctuel (24).

4. Capteur d'accélération selon l'une des revendications précédentes,
   **caractérisé en ce que**
   les entretoises (18, 20) qui relient les masses oscillantes (14, 16) sont reliées chaque fois au palier ponctuel (24) par un ressort (32, 34) dirigé radialement par rapport à la structure oscillante (12).

5. Capteur d'accélération selon l'une des revendications 3 et 4,
   **caractérisé en ce que**
   les masses oscillantes (14, 16) possèdent un entraînement par peigne électrostatique (38).

6. Capteur d'accélération selon la revendication 5,
   **caractérisé en ce que**
   l'entraînement par peigne (38) comprend des peignes mobiles (40) installés sur les surfaces frontales (36) des masses oscillantes (14, 16), surfaces tournées dans la direction périphérique de la structure oscillante (12), et ces peignes s'interpénètrent avec des peignes (42) installés de manière fixe sur le substrat (22).

7. Capteur d'accélération selon l'une des revendications précédentes,
   **caractérisé en ce que**
   la structure oscillante (12) comprend en tout quatre structures de peigne (38, 44) dont deux sont branchées comme entraînements à peigne électrostatique (38) et deux comme récepteurs capacitifs (44).

8. Capteur d'accélération selon l'une des revendications précédentes,
   **caractérisé en ce que**

la structure oscillante (12) comporte une régulation électronique de palier (62) agissant dans le plan, c'est-à-dire ayant une action latérale.

9.  Capteur d'accélération selon la revendication 8,
    **caractérisé en ce que**
    la régulation électronique de palier (62) est formée par des structures de peigne (68) installées de manière diamétralement opposée à la périphérie extérieure (30) des masses oscillantes (14, 16).

10. Capteur d'accélération selon l'une quelconque des revendications 2 à 9,
    **caractérisé en ce qu'**
    en dessous des masses oscillantes (14, 16), des électrodes (54, 56) forment avec les masses oscillantes (14, 16) un moyen d'exploitation capacitif, et servent à la détection d'un mouvement de basculement lié à la vitesse de rotation hors du plan de la structure oscillante (12).

11. Capteur d'accélération selon la revendication 10,
    **caractérisé par**
    une régulation électronique de palier pour détecter le mouvement de basculement.

12. Capteur d'accélération selon l'une des revendications précédentes,
    **caractérisé en ce que**
    la fréquence de résonance de l'oscillation de torsion hors du plan est appliquée déjà mécaniquement par une fixation appropriée des ressorts (32, 34 ) à la structure oscillante (12) par la fréquence de résonance de la torsion dans le plan.

13. Capteur d'accélération selon l'une quelconque des revendications 2 à 12,
    **caractérisé en ce que**
    l'électrode (54, 56) prévue chaque fois sous une masse oscillante (14, 16) a une surface de segment de cercle plus petite que celle de la masse oscillante (14, 16).

14. Capteur d'accélération selon l'une des revendications 2 à 13,
    **caractérisé en ce que**
    la connexion des masses oscillantes (14, 16) se fait par l'intermédiaire du palier ponctuel (24).

15. Capteur d'accélération selon l'une quelconque des revendications 2 à 13 ,
    **caractérisé en ce que**
    la connexion des masses oscillantes (14, 16) se fait par des liaisons de contact reliées de l'extérieur aux entretoises (18, 20).

16. Capteur d'accélération selon la revendication 15,
    **caractérisé en ce que**
    les liaisons de contact sont formées par des ressorts (78, 80) extrêmement souples dans le plan d'oscillation de la structure oscillante (12).

17. Capteur d'accélération selon l'une des revendications 14 à 16,
    **caractérisé en ce que**
    la connexion se fait par un plan de polysilicium enfoui.

18. Capteur selon l'une quelconque des revendications 14 à 16,
    **caractérisé en ce que**
    la connexion se fait par des zones diffusées, enfouies dans la matière du substrat, par des chemins conducteurs diffusés ou par des surfaces de condensateur diffusées.

Fig. 1

Fig. 2

Fig. 3

Fig. 4

EP 0 835 425 B1